# EUROPEAN PATENT APPLICATION

(11) **EP 2 026 295 A1**
(43) Date of publication of application: **18.02.2009**
(21) Application number: 08104972.8
(22) Date of filing: 06.08.2008
(51) Int. Cl.: G07F 7/10

(54) **A method to set personal identification numbers**

(30) Priority: 06.08.2007 TR 200705450
(71) Applicant: Yurekli, Ahmet, Istanbul (TR)
(72) Inventor: Yurekli, Ahmet, Istanbul (TR)
(74) Representative: Dericioglu, Ekin

(57) **Abstract**

This invention relates to a method to set Personal Identification Numbers (PINs) used in authenticating the identity of users of electronic transaction terminals, credit cards, financial accounts, or any other systems requiring entry of predetermined numeric codes for authorization to perform a transaction or access data. This is achieved by placing an automated voice call to the mobile phone of the user, performing a security check by asking a security question, upon successful completion of the security check, asking the user to enter the desired PIN, and storing this value as the PIN of the said card, or account for this user.

## Description

### Field of the Invention

This invention relates to a method to set Personal Identification Numbers (PINs) used in authenticating the identity of users of electronic transaction terminals, credit cards, financial accounts, or any other systems requiring entry of predetermined numeric codes for authorization to perform a transaction or access data.

### Background of the Invention

Personal Identification Numbers (PINs) are commonly used to check the identity of users of various systems including bank ATM or credit cards. When a card is issued to a user for the first time, the common practice is to generate a random PIN associated with this card and delivered to the user, usually by email, in a separate envelope.

Since this envelope is usually delivered to the same address as the card associated with it, this creates a security risk, because an unauthorized person intercepting the envelope containing the card at the point of delivery may also be able intercept the envelope containing the PIN, and thus gain access to sensitive data or perform transactions with false identity. PIN containing envelopes not destroyed properly may also cause unauthorized access.

Furthermore, because random PINs are usually hard to remember, they can make it more difficult for the users to start using their cards.

In the state of the art, US 2003001005 patent application describes a method where a card is sent to the user without a PIN, a terminal device is used by the user to set a PIN and activate the card, or a PIN set by the card issuer is activated by the user by calling an interactive voice response (IVR) system.

### Brief Description of the Invention

The purpose of this invention is to realize a method to set Personal Identification Numbers (PINs) used in authenticating the identity of users of electronic transaction terminals, credit cards, financial accounts, or any other systems requiring entry of predetermined numeric codes for authorization to perform a transaction or access data.

This is achieved by initially (typically, but not necessarily shortly after the delivery of a card or account details to the user) placing an automated voice call to the mobile phone of the user, asking the user to enter a PIN she wishes to associate with the card, account, or other system to be used after authentication, authenticating the user by asking the user to respond to a security question, checking this answer against a stored value, and upon verification with a matching answer to the security question, setting the value entered by the user as the PIN for the said card, financial account, or other system.

### Detailed Description of the Invention

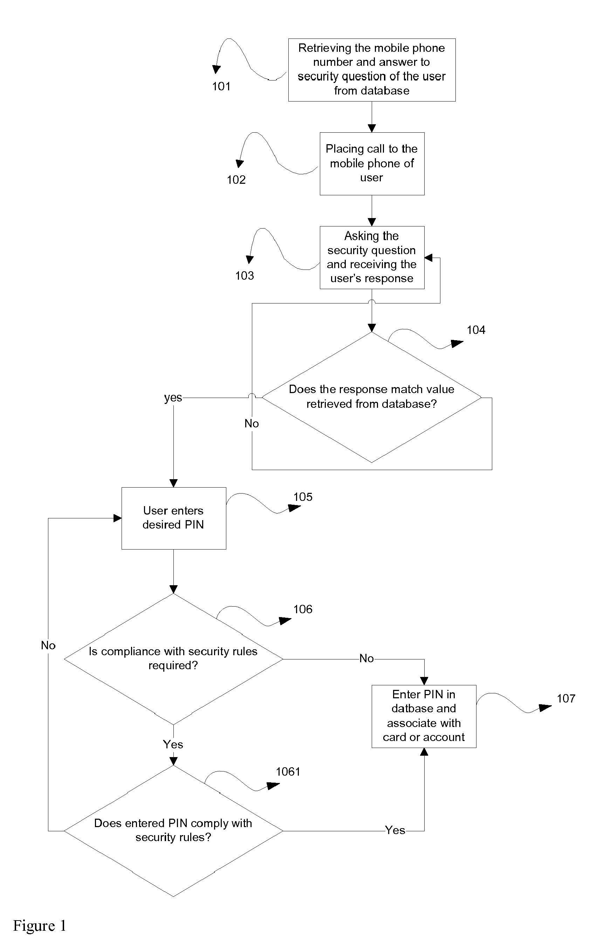

The method to set PINs and realize the objective of the invention is depicted in the flowchart in Figure 1.

The method comprises the following steps:
101. Accessing the mobile phone number, and answer to the security question from a database during the issuing, or before or after the delivery of the card, or account information,
102. Placing an automated voice call to the mobile phone number of the user of the card, financial account or other system with which the PIN will be associated,
103. Upon answering the voice call, an interactive voice response unit asking the user the security question and the user answering using the keypad on the phone
104. Comparing the answer of the user with the stored value retrieved from the database, and repeating the question if the answer does not match the stored value retrieved from the database,
105. Following a correct answer received from the user, asking the user to enter a PIN she wishes to use to authenticate herself as a legitimate user of this card, account, or system, using the numeric keys on the phone ,
106. Optionally checking the PIN entered by the user for compliance with predetermined security rules,
   1061. In the event of a security rules compliance check being required and a rule is found to be violated (such as the user setting her birth year as the PIN), asking the user to select another PIN,
107. Termination of the call and setting the PIN entered by the user as the PIN associated with this card or account.

In another embodiment of the invention, upon a wrong response being entered in step 103, the call is terminated in step 104.

This method has the advantages of not relying on sending PINs in printed envelopes, and not requiring users to learn random PINs which they may have to change afterwards or may have trouble remembering. The method also saves paper, and in most cases, costs less than delivering PINs in envelopes.

## Claims

1. A method to set PINs for credit cards, financial accounts or other systems requiring users to authenticate their identities by entering predetermined numeric codes, **characterized by** the steps of:
• Accessing the mobile phone number, and answer to the security question from a database during the issuing, or before or after the delivery of the card, or account information (101),
• Placing an automated voice call to the mobile phone number of the user of the card, financial account or other system with which the PIN will be associated (102),
• Upon answering the voice call, an interactive voice response unit asking the user the security question and the user answering using the keypad on the phone (103),
• Comparing the answer of the user with the stored value retrieved from the database, and repeating the question if the answer does not match the stored value retrieved from the database (104),
• Following a correct answer received from the user, asking the user to enter a PIN she wishes to use to authenticate herself as a legitimate user of this card, account, or system, using the numeric keys on the phone (105),
• Optionally checking the PIN entered by the user for compliance with predetermined security rules(106),
• In the event of a security rules compliance check being required and a rule is found to be violated (such as the user setting her birth year as the PIN), asking the user to select another PIN(1061),
• Termination of the call and setting the PIN entered by the user as the PIN associated with this card or account (107)

2. A method as described in claim 1, but in which the call is terminated in step (104) upon a wrong response being entered in step (103).
